# EUROPEAN PATENT SPECIFICATION

(11) **EP 3 756 822 B1**
(45) Date of publication and mention of the grant of the patent: **30.03.2022**
(21) Application number: 20179048.2
(22) Date of filing: 09.06.2020
(51) Int. Cl.: B23Q 1/52, B23C 1/12, B23Q 16/02

(54) **SPINDLE-MOUNTING HEAD FOR A MACHINE TOOL**
SPINDELMONTAGEKOPF EINER WERKZEUGMASCHINE
TÊTE DE MONTAGE À BROCHE POUR UNE MACHINE-OUTIL

(30) Priority: 11.06.2019 IT 201900008664
(43) Date of publication of application: 30.12.2020
(73) Proprietor: Mandelli S.R.L., 29122 Piacenza (IT)
(72) Inventor: BERTUZZI, Massimo, 29010 Rivalta di Gazzola PC (IT); GELLINI, Saverio, Faenza Ravenna (IT)
(74) Representative: Zermani, Umberto

(56) References cited:
- WO-A1-2017/060822
- DE-A1-102010 054 636
- GB-A- 2 215 243
- US-A1- 2015 122 072

## Description

This invention relates to a spindle-mounting head for a machine tool, preferably for a machining centre *tilting* head machining centre.

This invention is applied in particular in the sector of mechatronics, in particular in the production of machining centres for the aeronautics and aerospace sectors.

In the prior art, the machining centres are divided by type and number of "operating" axes; more specifically, machining centres are known which are equipped with a tool-holder spindle rotatable about its own central axis and at the same time *tilting,* that is, which can be oriented, by rotation about an axis at right angles to the central axis. These machines typically have 5 axes or more, wherein the spindle-mounting head comprises inside it the movement system, that is to say, the orientation system, of the spindle.

Patent document US2015/122072 forms the basis of the preamble of independent claim 1. Patent document US5584621, shows a first prior art solution for the movement of the spindle about the so-called "axis A", that is to say, the horizontal axis, wherein the spindle is coupled directly to an electric motor/torque motor.

This solution does allow a high dynamic level, free of clearances, but does not allow the generation of high torques keeping the dimensions of the head reduced, an essential specification in certain applications, such as, for example, that of aeronautics.

A further prior art solution comprises a screw-gear coupling, wherein the gear is connected directly to the spindle whilst the screw is moved, either directly or by means of gear wheels or belts, by the motor.

That solution, whilst it is inexpensive and generally not bulky, has several drawbacks linked to the presence of clearances, which are intrinsic in the screw-gear coupling, which, if they are to be limited or eliminated, lead to an increase in friction, with consequent critical issues in terms of machining speed and wear.

According to another prior art solution the motion between the motor and the spindle is transmitted by means of a transmission system with gears/gear wheels positioned in cascade fashion.

More precisely, the motor is coupled to a cascade of gear wheels which following a series of reductions transmit the rotational motion to a gear constrained to the spindle.

In these solutions there are systems for recovery of the clearance of the elastic type (i.e. springs) or hydraulic type, applied to one of the branches of the cascade of gears, which allow maximum operating precision.

Disadvantageously, this solution is bulky and structurally complex, since it has to provide numerous gear wheels along at least two distinct branches, one of which is in turn equipped with a preloading system for recovering the clearance.

Moreover, since it is a single cascade of gears which gives the torque and the preloading, the transmissible torque is also a critical parameter and limited.

The aim of this invention is therefore to provide a spindle-mounting head for a machine tool which overcomes the above-mentioned drawbacks of the prior art.

In particular, the aim of the invention is to provide a spindle-mounting head for a machine tool which combines a high level of working precision with a limited size.

Moreover, the aim of the invention is to provide a spindle-mounting head for a machine tool which minimises clearances and has a high thermal and structural symmetry.

Said aims are achieved by a spindle-mounting head for a machine tool having the features described in one or more of the appended claims and in particular comprising a supporting body, a tool-mounting spindle and movement means.

The supporting body comprises at least a first and a second arm protruding from a base portion and defining a fork-shaped structure.

The tool-mounting spindle is at least partly housed in said fork-shaped structure and rotatably connected to said first arm and second arm to rotate about an axis of oscillation.

The spindle comprises a tool-mounting body rotatable about a relative machining axis at right angles to said axis of oscillation.

The movement means are operatively interposed between the supporting body and the spindle to rotate it about said axis of oscillation.

According to an aspect of the invention, the movement means comprise a first actuator unit and a second actuator unit housed, respectively, in the first arm and in the second arm and both configured for rotating the spindle about the axis of oscillation.

Each actuator unit comprises a rotary motor configured to generate a drive torque and a reduction gear unit coupled to said rotary motor and configured to provide to an outlet shaft a transmitted torque greater than the drive torque. The outlet shaft is oriented transversely to the axis of oscillation.

For each actuator unit there is a bevel gear equipped with a first wheel keyed on said outlet shaft and a second wheel constrained to said spindle and coaxial with said axis of oscillation.

Advantageously, thanks to this solution it is possible to optimise the control of the oscillation movement of the spindle, balancing the machine both from the structural and thermal point of view.

In this regard, preferably, said first and said second actuator unit are configured to generate, on the axis of oscillation, respective transmitted torques unbalanced with respect to each other, so as to eliminate the clearance in the kinematic chains.

More specifically, the two actuator units are controlled according to a master-slave mode.

The first actuator unit is preferably controlled in position, that is to say, following a reference defining an angular position.

The second actuator unit is preferably driven in torque, that is to say, by following a torque reference associated with the torque generated by the first actuator unit.

Preferably, the second actuator unit is controlled with a torque equal to the torque generated by the first actuator unit reduced by a constant.

These and other features and the relative advantages will become more apparent from the following non-limiting description of a preferred embodiment of a spindle-mounting head for a machine tool as illustrated in the accompanying drawings, in which:

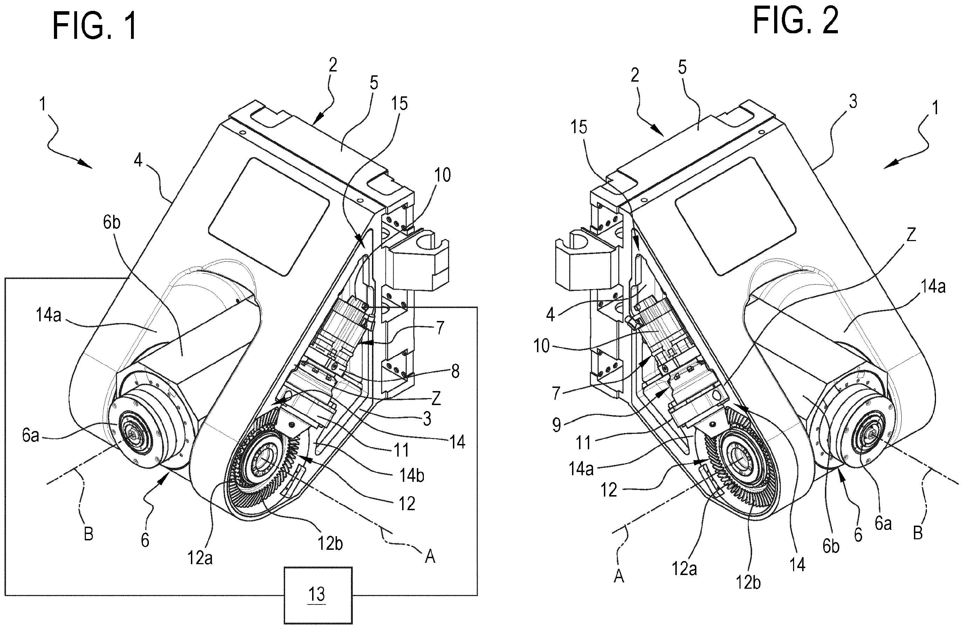

- Figures 1 and 2 are two specular perspective views of the spindle-mounting head according to the invention, with some parts cut away to better illustrate others;

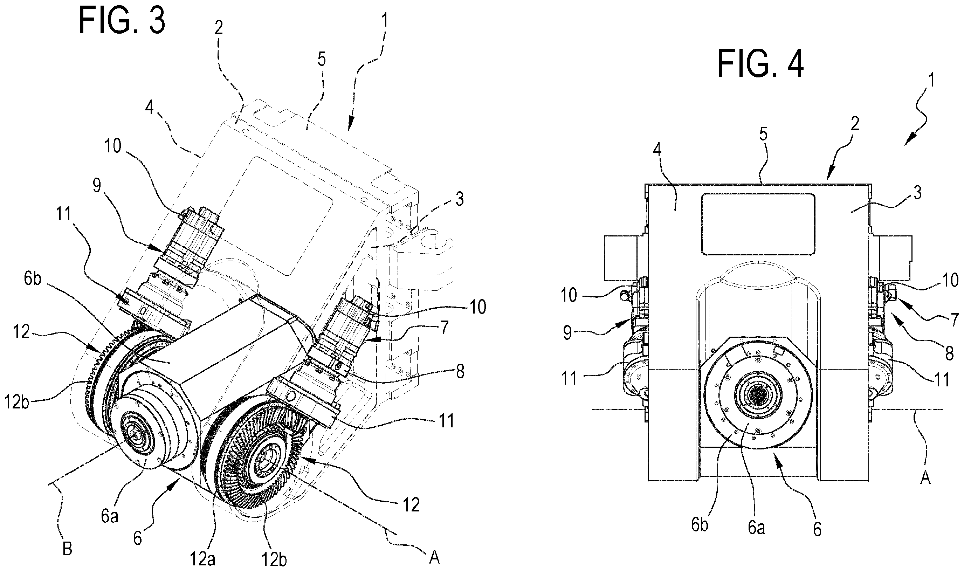

- Figure 3 shows the same perspective view of Figure 1 with the entire structure of the spindle-mounting head transparent;
- Figure 4 shows a front view of the spindle-mounting head of Figure 1;

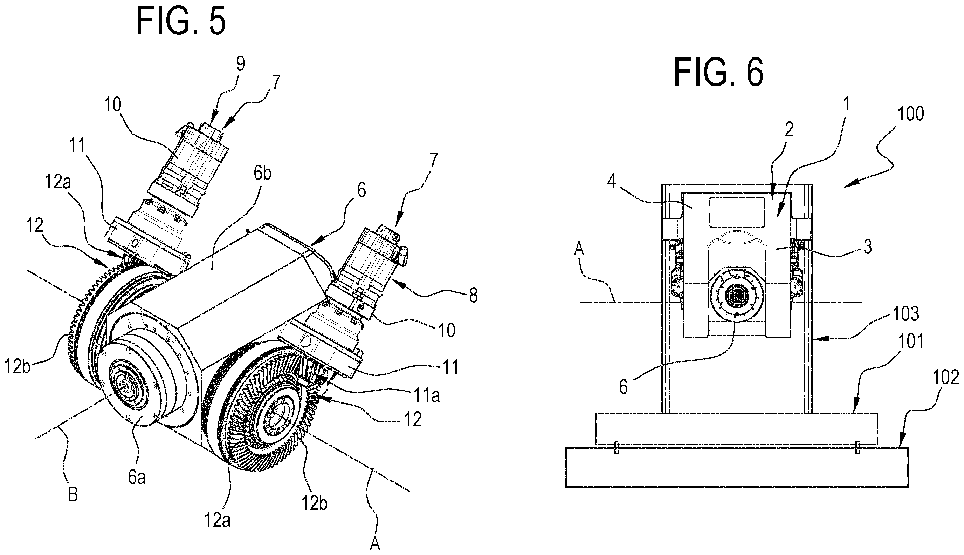

- Figure 5 shows a portion of the head of Figure 1 isolated from the rest of the structure;
- Figure 6 is schematic representation of a machine tool comprising the spindle-mounting head according to the invention.

With reference to the accompanying drawings, the numeral 1 denotes a spindle-mounting head for a machine tool 100 according to this invention.

The spindle-mounting head 1 is located in machining centres 100 with a *tilting* head, that is to say, with spindle-mounting head which is able to vary its orientation relative to an axis of rotation (or axis of oscillation "A") which is typically, but not exclusively, horizontal.

The machining centre, or machine tool 100, comprises a part-holder table 101, generally rotatable about its own axis and/or movable along one or more directions of movements.

The table is associated with a frame 102 from which extends a supporting structure or upright 103 for the spindle-mounting head 1. Said upright 103 is alongside the part-holder table 101 and extends at right angles to it along a substantially vertical direction.

The upright 103 in turn may be movable along one or more axes of movement relative to the table.

The upright 103 is also associated with the spindle-mounting head 1, preferably in a movable fashion along the upright so as to vary the height of the spindle relative to the part-holder table 101.

The spindle-mounting head 1 comprises a supporting body 2 equipped with a first arm 3 and a second arm 4 protruding from a base portion 5 and defining a fork-shaped structure.

The base portion 5 of the supporting body 2 is slidably constrained to the upright 103 for translating along said substantially vertical direction.

The two arms 3, 4 extend substantially parallel to each other starting from two spaced portions of the base 5 in such a way as to face each other. A housing space is thus defined between the two arms 3, 4.

A tool-mounting spindle is at least partly rotatably housed in the fork-shaped structure of the supporting body 2, in particular inside said housing space.

Preferably, the tool-mounting spindle 6 is rotatably connected to the first arm 3 and to the second arm 4 to rotate about an axis of oscillation "A" (or tilt axis).

The spindle 6 comprises a tool-mounting body 6a rotatable about its own machining axis "B" at right angles to the axis of oscillation "A".

Preferably, the spindle 6 is an electric spindle, that is to say, a spindle equipped with at least one rotor-stator pack inside it, with a rotor (not illustrated) preferably keyed directly on the shaft for retaining the tool.

For this reason, in the preferred embodiment the spindle 6 comprises a containment body 6b inside of which are housed a stator, a rotor and a transmission shaft coupled to said rotor.

The transmission shaft is rotatable inside the containment body and coupled to a pack of bearings, preferably two.

At its free end there is a portion for retaining/constraining a processing tool (not illustrated), defining said tool-mounting body 6a.

The tool-mounting head 1 also comprises movement means 7 operatively interposed between the supporting body 2 and the spindle 6 for rotating it about said axis of oscillation "A".

The movement means 7 are designed to allow oscillation of the spindle about the axis "A" (as mentioned preferably, horizontal).

According to an aspect of the invention, the movement means 7 comprise a first actuator unit 8 and a second actuator unit 9 housed, respectively, in the first arm 3 and in the second arm 4 and both configured for rotating the spindle 6 about the axis of oscillation "A".

Advantageously, the presence of two actuator units 8, 9 complementary to each other and positioned in the two arms 3, 4 of the supporting body makes it possible to balance better the structure of the machine and to guarantee the minimising of the clearances.

There is also a control unit 13 associated with the actuator units 8, 9 and configured for controlling them in a complementary fashion for moving the spindle about the axis of oscillation "A" and at the same time reducing the clearances.

Preferably, in this regard, the first 8 and the second 9 actuator units are configured to generate on the axis of oscillation "A" respective torques transmitted to each other in an unbalanced fashion so as to eliminate the clearance in the kinematic chains.

More specifically, the control unit 13 is configured for controlling the first 8 and the second 9 actuator units in such a way as to generate transmitted torques which are slightly unbalanced with each other and such as to determine a sufficient preloading to reduce the clearances of the kinematic chain.

Preferably, the two actuator units are controlled according to a master-slave mode.

The first actuator unit 8 is preferably controlled in position, that is to say, following a reference defining an angular position.

The second actuator unit 9 is preferably driven in torque, that is to say, by following a torque reference associated with the torque generated by the first actuator unit 9.

Preferably, the second actuator unit 9 is controlled with a torque equal to the torque generated by the first actuator unit 8 reduced by a constant.

In the preferred embodiment, this constant is part of the nominal torque which can be generated by the first actuator 9, preferably between 2% and 10% of said nominal torque.

For this reason, the operating field of the machine, which ranges from a negative maximum value to a positive maximum value of the torque which can be generated, will have three different operating zones.

In a first, negative working zone, both the torques generated by the first 8 and the second 9 actuator unit have the same orientation, generating concordant torques in a first direction of rotation.

In a second, positive working zone, both the torques by the first 8 and the second 9 actuator unit again have the same orientation, generating concordant torques in a second direction of rotation, opposite to the first.

In a third operating zone, interposed between the first and the second, the torque generated by the first actuator unit 8 has the opposite direction relative to that generated by the second actuator unit 9. In this way, a preloading is generated on the transmission and the gears operate on opposite sides.

Advantageously, therefore, in the first and second operating zones, in which high torques are generated (in absolute value), both the actuator units 8, 9 contribute to satisfy the load and can be used for "heavy" or roughing processing, which do not require preloading of the axis.

On the other hand, in the third zone, in which limited torques are generated (in absolute value), it is possible to perform precision (finishing) operations which require low torque and low clearance/high rigidity of the transmission.

Preferably, each actuator unit 8, 9 comprises a rotary motor 10 configured to generate a drive torque and a reduction gear unit 11 coupled to the rotary motor 10.

The reduction gear unit 11 is configured for providing to an outlet shaft 11a a transmitted torque greater than said drive torque generated by the rotary motor 10.

Preferably, in the preferred embodiments, the motor 10 and the reduction gear unit 11 define a gear motor.

Preferably, the outlet shaft 11a is oriented transversely, more preferably at right angles, to the axis of oscillation "A".

In order to transmit the rotational motion to the spindle 6, the actuator units 8, 9 each comprise a bevel gear 12 equipped with a first (conical) wheel 12a keyed on the outlet shaft 11a and a second (conical) wheel 12b connected to the spindle 6 and coaxial with said axis of oscillation "A".

In particular, the second wheel 12b is connected to the containment body 6b of the spindle, more specifically to a lateral flank of the spindle.

The bevel gears 12 preferably have the same transmission ratio, more preferably between 3 and 10.

Structurally, the first 8 and the second 9 actuator unit are positioned symmetrically relative to a mid-plane of the supporting body 2 at right angles to said axis of oscillation "A" and comprising said operating axis "B".

More specifically, the two actuator units have motors 10, reduction gear units 11 and bevel gears 12 positioned specularly to each other, so as to facilitate the design, maintenance and assembly of the head 1, as well as guaranteeing thermal and structural balancing.

Preferably, the supporting body 2 has a supporting frame 15 defining the anchors for the actuator units and the seats for the rotation bearings of the spindle 6.

At the axis of oscillation "A" there are at least two supports connected to respective bearings (the latter connected to the second wheel 12b of the bevel gears 12).

Two plates 14 are, on the other hand, housed inside the first arm 3 and the second arm 4. Thus, the supporting body 2 comprises at least one supporting plate 14 housed both in the first arm 3 and in the second arm 4. More specifically, at the first arm 3 and the second arm 4 it has respective supporting plates 14.

Each support plate 14 has at least one first face 14a and a second face 14b opposite to each other and both transversal to said axis of oscillation "A".

The plates 14 have a first face oriented towards the spindle 6 and a second face 14b oriented away from the spindle 6.

It should be noted that, preferably, the plate 14 is located in the proximity of the second wheel (conical) 12b of the bevel gear 12.

In this regard, the rotary motor 10 or the reduction gear unit 11 (if necessary both) of each actuator unit 8, 9 is connected to the plate 14, in such a way as to have a rigid connection close to the transmission zone of the torque.

Preferably, the motor 10 or the reduction gear unit 11 are connected directly to one of either the first face 14a or the second face 14b of the respective plate 14.

In the preferred embodiment, the motor 10 or the reduction gear unit 11 of each actuator unit 8, 9 are connected to the second face 14b of the respective plate 14.

Preferably, the reduction gear unit 11 is constrained to the respective face of the plate 14, with the outlet shaft 12 and the motor 10 extending away from each other and in a cantilever fashion relative to the plate 14.

In this regard, the plate 14 preferably comprises at least one fastening area "Z" for the respective motor 10 or reduction gear unit 11.

Each fastening area "Z" comprises means (not illustrated) for finely adjusting the position of the respective motor 10 or reduction gear unit 11, preferably defined by slots or by screw regulating means.

In the preferred embodiment, the motor 10/reduction gear unit 11 (or gear motor) is of the linear type.

In other words, said rotary motor 10 of each actuator unit 8, 9 comprises a drive shaft parallel to said outlet shaft 12 of the reduction gear unit 11. Advantageously, in this way both the gear motors extend in a straight line away from the axis of oscillation "A" and at right angles to it; this maximises the volumetric occupation of arms 3, 4, reducing the overall dimensions of the head.

The invention achieves the above mentioned aims and brings important advantages.

In effect, the location of two gear motors with bevel gear transmission on opposite sides of the spindle allows, on the one hand, to have a high dynamic level in the motion with equally high torque transmitted, and, on the other hand, eliminates clearance in a simple manner whilst keeping the overall dimensions small.

Advantageously, moreover, in applications with an electro-spindle it is possible to optimise the occupation of the structure, reducing the overall dimensions and also balancing it both from the point of view of the masses and the forces involved.

## Claims

1. Spindle-mounting head for a machine tool comprising:
- a supporting body (2), comprising at least a first (3) and a second arm (4) protruding from a base portion (5) and defining a fork-shaped structure;
- a tool-mounting spindle (6) at least partly housed in said fork-shaped structure and rotatably connected to said first arm (3) and second arm (4) to rotate about an axis of oscillation (A); said spindle (6) comprising a tool-mounting body (6a) rotatable about a relative machining axis (S) at right angles to said axis of oscillation (A);
- movement means (7) operatively interposed between the supporting body (2) and said spindle (6) to rotate it about said axis of oscillation (A);
wherein the movement means (7) comprise a first actuator unit (8) and a second actuator unit (9) housed, respectively, in the first arm (3) and in the second arm (4) and both configured for rotating the spindle (6) about the axis of oscillation (A), wherein each actuator unit (8, 9) comprises:
- a rotary motor (10) configured to generate a drive torque;
- a reduction gear unit (11) coupled to said rotary motor (10) and configured to supply to an output shaft (11a) a transmitted torque greater than said drive torque; **characterized in that** said outlet shaft (11a) being oriented transversely to said axis of oscillation (A);
- a bevel gear (12) equipped with a first wheel (12a) keyed to said outlet shaft (11a) and a second wheel (12b) connected to said spindle (6) and coaxial with said axis of oscillation (A).

2. The spindle-mounting head according to claim 1, wherein said first actuator unit (8) and second actuator unit (9) are configured to generate on the axis of oscillation (A) respective transmitted torques balanced between them to annul the clearance of the kinematic chains.

3. The spindle-mounting head according to claim 1 or 2, wherein said first actuator unit (9) and second actuator unit (9) are controlled according to a master-slave mode.

4. The spindle-mounting head according to claim 3, wherein the second actuator unit (9) is controlled with a torque equal to the torque generated by the first actuator unit (8) reduced by a constant, preferably between 2% and 10% of a nominal torque of said first actuator unit (8).

5. The spindle-mounting head according to any one of the preceding claims, wherein the supporting body (2) comprises at least one supporting plate (14) housed in each first arm (3) and second arm (4) and having at least a first face (14a) and a second face (14b) opposite to each other and both transversal to said axis of oscillation (A), wherein the motor (10) and/or the reduction gear unit (11) of each actuator unit (8, 9) is constrained to the first face (14a) or to the second face (14b) of the respective plate (14).

6. The spindle-mounting head according to claim 5, wherein the first face (14a) and the second face (14b) of each supporting plate (14) are oriented, respectively, in the direction of and away from the spindle (6); said motor (10) and/or said reduction gear unit (11) of each actuator unit (8, 9) being constrained to the second face (14b) of the respective plate (14).

7. The spindle-mounting head according to claim 5 or 6, wherein each actuator unit (8, 9) comprises a gear motor defined by the motor (10) and by the respective reduction gear unit (11), wherein the reduction gear unit (11) is connected to the respective first face (14a) or second face (14b) of the plate (14) with said outlet shaft (11a) and said motor (10) extending away from each other and in a cantilever fashion from said plate (14).

8. The spindle-mounting head according to any one of the preceding claims, wherein said rotary motor (10) of each actuator unit (8, 9) comprises a drive shaft (10) parallel to said outlet shaft (11a) of the reduction gear unit (11).

9. The spindle-mounting head according to any one of the preceding claims, wherein said first actuator unit (8) and said second actuator unit (9) are positioned symmetrically relative to a mid-plane of the supporting body (2) at right angles to said axis of oscillation (A) and comprising said machining axis (B).

10. The spindle-mounting head according to any one of the preceding claims, wherein said spindle (6) is an electro-spindle.

11. A machine tool comprising:
- a part holding device (101);
- at least one upright (103) alongside said part holding device (101) extending orthogonally to it along a substantially vertical direction;
- a spindle-mounting head (1) according to any one of the preceding claims, wherein the base portion (5) of the supporting body (2) is slidably constrained to said upright (103) for translating along said substantially vertical direction.

## Patentansprüche

1. Spindelmontagekopf einer Werkzeugmaschine, umfassend:
- einen Halterungskörper (2), umfassend einen ersten (3) und einen zweiten Arm (4), hervorstehend von einem Basisabschnitt (5) und definierend eine gabelförmige Konstruktion;
- eine Werkzeugmontagespindel (6), die mindestens teilweise in der gabelförmigen Konstruktion untergebracht und drehbar mit dem ersten Arm (3) und dem zweiten Arm (4) verbunden ist, um sich um eine Schwenkachse (A) zu drehen, wobei die Spindel (6) einen Werkzeugmontagekörper (6a) umfasst, drehbar um eine entsprechende Bearbeitungsachse (B) in rechten Winkeln zur Schwenkachse (A);
- Bewegungsmittel (7), die betriebswirksam zwischen dem Halterungskörper (2) und der Spindel (6) eingesetzt sind, um sich um die Schwenkachse (A) zu drehen,
wobei die Bewegungsmittel (7) zudem eine erste Antriebseinheit (8) und eine zweite Antriebseinheit (9) umfassen, die jeweils im ersten Arm (3) bzw. im zweiten Arm (4) untergebracht und beide ausgelegt sind, um die Spindel (6) um die Schwenkachse (A) zu drehen, wobei eine jede Antriebseinheit (8, 9) Folgendes umfasst:
- einen Rotationsmotor (10), der ausgelegt ist, um ein Antriebsdrehmoment zu erzeugen;
- eine Untersetzungsgetriebeeinheit (11), die mit dem Rotationsmotor (10) gekuppelt und ausgelegt ist, um einer Abtriebswelle (11a) ein übertragenes Drehmoment bereitzustellen, das größer ist als das Antriebsdrehmoment, **dadurch gekennzeichnet, dass** die Abtriebswelle (11a) quer zur Schwenkachse (A) ausgerichtet ist;
- ein Kegelradgetriebe (12), das mit einem ersten Rad (12a) ausgestattet ist, das an der Abtriebswelle (11a) verkeilt ist, und mit einem zweiten Rad (12b), das mit der Spindel (6) verbunden und koaxial zur Schwenkachse (A) angeordnet ist.

2. Spindelmontagekopf nach Anspruch 1, wobei die erste Antriebseinheit (8) und die zweite Antriebseinheit (9) ausgelegt sind, um auf der Schwenkachse (A) jeweilige übertragene zueinander ausgewogene Drehmomente zu erzeugen, um das Spiel der kinematischen Ketten auszugleichen.

3. Spindelmontagekopf nach Anspruch 1 oder 2, wobei die erste Antriebseinheit (9) und die zweite Antriebseinheit (9) nach einem Master-Slave-Modus gesteuert werden.

4. Spindelmontagekopf nach Anspruch 3, wobei die zweite Antriebseinheit (9) mit einem Drehmoment gesteuert wird, das gleich dem Drehmoment ist, das von der ersten Antriebseinheit (8) erzeugt wird, reduziert um eine Konstante, vorzugsweise zwischen 2 % und 10 % eines Nenndrehmoments der ersten Antriebseinheit (8).

5. Spindelmontagekopf nach einem der vorhergehenden Ansprüche, wobei der Halterungskörper (2) mindestens eine Halterungsplatte (14) umfasst, die in jedem ersten Arm (3) und zweiten Arm (4) untergebracht ist und mindestens eine erste Seitenfläche (14a) und eine zweite Seitenfläche (14b) aufweist, die gegenständig zueinander und beide quer zur Schwenkachse (A) angeordnet sind, wobei der Motor (10) und/oder die Untersetzungsgetriebeeinheit (11) einer jeden Antriebseinheit (8, 9) an der ersten Seitenfläche (14a) oder der zweiten Seitenfläche (14b) der jeweiligen Platte (14) befestigt sind.

6. Spindelmontagekopf nach Anspruch 5, wobei die erste Seitenfläche (14a) und die zweite Seitenfläche (14b) einer jeden Halterungsplatte (14) jeweils in Richtung und wegführend von der Spindel (6) ausgerichtet sind, wobei der Motor (10) und/oder die Untersetzungsgetriebeeinheit (11) einer jeden Antriebseinheit (8, 9) an der zweiten Seitenfläche (14b) der jeweiligen Platte (14) befestigt sind.

7. Spindelmontagekopf nach Anspruch 5 oder 6, wobei eine jede Antriebseinheit (8, 9) einen Getriebemotor umfasst, der durch den Motor (10) und die jeweilige Untersetzungsgetriebeeinheit (11) definiert ist, wobei die Untersetzungsgetriebeeinheit (11) mit der jeweiligen ersten Seitenfläche (14a) oder zweiten Seitenfläche (14b) der Platte (14) verbunden ist, wobei sich die Abtriebswelle (11a) und der Motor (10) wegführend voneinander und auskragend aus der Platte (14) erstrecken.

8. Spindelmontagekopf nach einem der vorhergehenden Ansprüche, wobei der Rotationsmotor (10) einer jeden Antriebseinheit (8, 9) eine Antriebswelle (10) umfasst, die parallel zur Abtriebswelle (11a) der Untersetzungsgetriebeeinheit (11) angeordnet ist.

9. Spindelmontagekopf nach einem der vorhergehenden Ansprüche, wobei die erste Antriebseinheit (8) und die zweite Antriebseinheit (9) symmetrisch relativ zu einer Mittelebene des Halterungskörpers (2) in rechten Winkeln zur Schwenkachse (A) positioniert sind und die Bearbeitungsachse (B) umfassen.

10. Spindelmontagekopf nach einem der vorhergehenden Ansprüche, wobei die Spindel (6) eine Elektrospindel ist.

11. Werkzeugmaschine, umfassend:
- eine Werkstückhaltervorrichtung (101);
- mindestens einen Pfosten (103) längsseits der Werkstückhaltervorrichtung (101), der sich rechtwinkelig zu diesem entlang einer im Wesentlichen vertikalen Richtung erstreckt;
- einen Spindelmontagekopf (1) nach einem der vorhergehenden Ansprüche, wobei der Basisabschnitt (5) des Halterungskörpers (2) verschiebbar am Pfosten (103) befestigt ist, um entlang der im Wesentlichen vertikalen Richtung verschoben zu werden.

## Revendications

1. Tête de montage à broche pour une machine-outil, comprenant :
- un corps de support (2), comprenant au moins un premier (3) et un second bras (4) faisant saillie depuis une partie de base (5) et définissant une structure en forme de fourche ;
- une broche de montage d'outil (6) au moins partiellement logée dans ladite structure en forme de fourche et connectée de manière rotative audit premier bras (3) et audit second bras (4) pour tourner autour d'un axe d'oscillation (A) ; ladite broche (6) comprenant un corps de montage d'outil (6a) pouvant tourner autour d'un axe d'usinage relatif (S) à angle droit par rapport audit axe d'oscillation (A) ;
- des moyens de déplacement (7) interposés de manière opérationnelle entre le corps de support (2) et ladite broche (6) pour la faire tourner autour dudit axe d'oscillation (A) ;
dans laquelle les moyens de déplacement (7) comprennent une première unité d'actionnement (8) et une seconde unité d'actionnement (9) logées, respectivement, dans le premier bras (3) et dans le second bras (4) et toutes deux configurées pour faire tourner la broche (6) autour de l'axe d'oscillation (A), dans laquelle chaque unité d'actionnement (8, 9) comprend :
- un moteur rotatif (10) configuré pour générer un couple d'entraînement ;
- une unité d'engrenage de réduction (11) couplée audit moteur rotatif (10) et configurée pour fournir à un arbre de sortie (11a) un couple transmis supérieur audit couple d'entraînement ; **caractérisée en ce que** ledit arbre de sortie (11a) est orienté transversalement audit axe d'oscillation (A) ;
- un engrenage conique (12) équipé d'une première roue (12a) calée sur ledit arbre de sortie (11a) et d'une seconde roue (12b) reliée à ladite broche (6) et coaxiale audit axe d'oscillation (A).

2. Tête de montage à broche selon la revendication 1, dans laquelle ladite première unité d'actionnement (8) et la deuxième unité d'actionnement (9) sont configurées pour générer sur l'axe d'oscillation (A) des couples transmis respectifs équilibrés entre eux pour annuler le jeu des chaînes cinématiques.

3. Tête de montage à broche selon la revendication 1 ou 2, dans laquelle ladite première unité d'actionnement (9) et la seconde unité d'actionnement (9) sont commandées selon un mode maître-esclave.

4. Tête de montage à broche selon la revendication 3, dans laquelle la deuxième unité d'actionnement (9) est commandée avec un couple égal au couple généré par la première unité d'actionnement (8) réduit d'une constante, de préférence entre 2% et 10% d'un couple nominal de ladite première unité d'actionnement (8).

5. Tête de montage à broche selon l'une quelconque des revendications précédentes, dans laquelle le corps de support (2) comprend au moins une plaque de support (14) logée dans chaque premier bras (3) et deuxième bras (4) et ayant au moins une première face (14a) et une deuxième face (14b) opposées l'une à l'autre et toutes deux transversales audit axe d'oscillation (A), dans laquelle le moteur (10) et/ou l'unité d'engrenage de réduction (11) de chaque unité d'actionnement (8, 9) est fixé(e) à la première face (14a) ou à la seconde face (14b) de la plaque respective (14).

6. Tête de montage à broche selon la revendication 5, dans laquelle la première face (14a) et la seconde face (14b) de chaque plaque de support (14) sont orientées, respectivement, dans la direction de la broche (6) et à l'opposé de celle-ci ; ledit moteur (10) et/ou ladite unité d'engrenage de réduction (11) de chaque unité d'actionnement (8, 9) étant contraint(e) à la seconde face (14b) de la plaque respective (14).

7. Tête de montage à broche selon la revendication 5 ou 6, dans laquelle chaque unité d'actionnement (8, 9) comprend un moteur à engrenages défini par le moteur (10) et par l'unité d'engrenage de réduction respective (11), dans laquelle l'unité d'engrenage de réduction (11) est reliée à la première face (14a) ou à la seconde face (14b) respective de la plaque (14) avec ledit arbre de sortie (11a) et ledit moteur (10) s'écartant l'un de l'autre et en porte-à-faux depuis ladite plaque (14).

8. Tête de montage à broche selon l'une quelconque des revendications précédentes, dans laquelle ledit moteur rotatif (10) de chaque unité d'actionnement (8, 9) comprend un arbre d'entraînement (10) parallèle audit arbre de sortie (11a) de l'unité d'engrenage de réduction (11) .

9. Tête de montage à broche selon l'une quelconque des revendications précédentes, dans laquelle ladite première unité d'actionnement (8) et ladite deuxième unité d'actionnement (9) sont positionnées symétriquement par rapport à un plan médian du corps de support (2), à angle droit par rapport audit axe d'oscillation (A) et comprenant ledit axe d'usinage (B).

10. Tête de montage à broche selon l'une quelconque des revendications précédentes, dans laquelle ladite broche (6) est une électrobroche.

11. Machine-outil, comprenant :
- un dispositif de maintien de pièce (101) ;
- au moins un montant (103) le long dudit dispositif de maintien de pièce (101) s'étendant orthogonalement à celui-ci le long d'une direction sensiblement verticale ;
- une tête de montage à broche (1) selon l'une quelconque des revendications précédentes, dans laquelle la partie de base (5) du corps de support (2) est contrainte de manière coulissante audit montant (103) pour se déplacer en translation le long de ladite direction sensiblement verticale.
